# EUROPÄISCHE PATENTANMELDUNG

(11) **EP 4 826 672 A1**
(43) Veröffentlichungstag der Anmeldung: **21.10.2026**
(21) Anmeldenummer: 26161328.5
(22) Anmeldetag: 27.02.2026
(51) Int. Cl.: G06V 10/774, G06V 10/776, G06V 20/58

(54) **VERFAHREN ZUM ERKENNEN EINES PRIMÄROBJEKTS MITTELS EINES TRAINIERTEN OBJEKTDETEKTIONSMODELLS**

(30) Priorität: 16.04.2025 DE 102025114828
(71) Anmelder: CLAAS E-Systems GmbH, 49201 Dissen (DE)
(72) Erfinder: Korthals, Timo, 33818 Leopoldshöhe (DE); Felske, Mirco, 33604 Bielefeld (DE); Robbe, Carolin, 49565 Bramsche - Lappenstuhl (DE)
(74) Vertreter: CLAAS Gruppe

(57) **Zusammenfassung**

Die vorliegende Erfindung betrifft ein computer-implementiertes Verfahren (1000) zum Erkennen eines Primärobjekts (O1) in einer Feldumgebung (2070), das Verfahren (1000) umfassend: Bereitstellen eines trainierten Objektdetektionsmodells (M); und Erkennen des Primärobjekts (O1), indem ein Vektor (Z) der Feldumgebung (2070) erfasst wird und das Primärobjekt (O1) mittels des trainierten Objektdetektionsmodells (M) im erfassten Vektor (Z) detektiert wird. Die vorliegende Erfindung betrifft ferner eine landwirtschaftliche Arbeitsmaschine (2000).

## Beschreibung

Die vorliegende Erfindung betrifft ein computer-implementiertes Verfahren zum Erkennen eines Primärobjekts in einer Feldumgebung. Ferner betrifft die vorliegende Erfindung eine landwirtschaftliche Arbeitsmaschine.

Die präzise und effiziente Erkennung von Objekten in einer landwirtschaftlichen Feldumgebung - seien es Tiere, Menschen oder Fahrzeuge - spielt eine entscheidende Rolle für vielfältige Anwendungen in der Landwirtschaft. Sobald ein Objekt identifiziert wird, können landwirtschaftliche Maschinen basierend auf diesen Informationen angepasst werden. Erkennt das System beispielsweise einen Baum in der Fahrtrichtung der Maschine, kann der Bediener die Einstellungen derart vornehmen, dass der Baum umfahren wird, wodurch eine Kollision vermieden und ein sicherer Arbeitsablauf gewährleistet werden kann.

Bei der Objekterkennung in der Feldumgebung gelten typischerweise andere Standards als bei Fahrzeugen im Verkehr, da die Anforderungen und Bedingungen sich deutlich unterscheiden. In der Landwirtschaft steht die Identifizierung natürlicher und oft unregelmäßiger Objekte wie Pflanzen, Unkraut oder Bodenkonturen im Vordergrund. Die Feldumgebung erfordert flexible Modelle, die mit variablen Lichtverhältnissen, Wetterbedingungen und unstrukturierten Landschaften umgehen können. Im Gegensatz dazu konzentriert sich die Objekterkennung im Verkehr üblicherweise auf standardisierte Elemente wie Straßenschilder, Fahrspuren und andere Fahrzeuge. Modelle zur Erkennung von Objekten im Straßenverkehr sind demnach üblicherweise unbrauchbar für Feldumgebungen.

Zur Objekterkennung werden standardmäßig Objektdetektionsmodelle eingesetzt, die beispielsweise in der Lage sind, von einem Sensorsystem erfassten Vektor zu analysieren und zu klassifizieren. Ein Vektor ist üblicherweise eine strukturierte Datenstruktur, die räumliche Informationen über die Position und Ausdehnung eines Objekts im Raum und/oder strukturelle Informationen wie Dichte und Materialeigenschaften umfasst. Mittels der Objektdetektionsmodelle ist es möglich, zu erkennen, welches Objekt im erfassten Vektor dargestellt bzw. abgebildet wird.

Objektdetektionsmodelle werden üblicherweise basierend auf einem Trainingsvektoren (auch Trainingsdatensatz genannt) trainiert. Die Trainingsvektoren können dabei Inputvektoren, die beispielsweise 6-9 Dimensionen aufweisen, umfassen. Dabei sind typischerweise ein oder mehrere Primärobjekte und Sekundärobjekte in jeweils einem Inputvektor detektierbar bzw. abgebildet, d.h. einem der Inputvektoren können einem oder mehrerer Primärobjekte und Sekundärobjekte zugeordnet sein.

Herkömmlicherweise umfassen Trainingsvektoren (d.h. der Trainingsdatensatz) eine unbestimmte Anzahl bzw. Menge von Primärobjekte und Sekundärobjekte (d.h. die Trainingsvektoren weisen beispielsweise 20 % der Primärobjekte und 80 % der Sekundärobjekte auf). Ein derartiger Trainingsdatensatz bringt jedoch einige Herausforderungen mit sich. Beispielsweise kann für das Training eine große Datenmenge erforderlich sein. Dabei kann ferner eine hohe Rechenleistung notwendig sein. Generell können beim Training auch Stabilitätsprobleme auftreten. Zusätzlich können Probleme wie unzureichende Generalisierung, erhöhter Speicherbedarf und längere Trainingszeiten auftreten. Folglich können auch die auf dem Trainingsdatensatz basierenden Objektdetektionsmodelle an ihre Grenzen stoßen.

Eine Aufgabe der vorliegenden Erfindung ist es daher, die bisherigen Verfahren und Vorrichtungen derart weiterzuentwickeln, dass Objekte besonders effizient und präzise erkannt werden können.

Diese Aufgabe wird durch die hier offenbarten Ausführungsformen gelöst, die insbesondere durch den Gegenstand der unabhängigen Ansprüche definiert sind. Die abhängigen Ansprüche betreffen weitere Ausführungsformen. Verschiedene Aspekte und Ausführungsformen dieser Aspekte sind auch in der nachstehenden Zusammenfassung und Beschreibung offenbart, die zusätzliche Merkmale und Vorteile bieten.

Ein Aspekt bezieht sich auf ein computer-implementiertes Verfahren zum Erkennen eines Primärobjekts in einer Feldumgebung. Das Verfahren kann in einem Schritt ein Bereitstellen eines trainierten Objektdetektionsmodells umfassen. Dabei kann das Objektdetektionsmodell basierend auf Trainingsvektoren trainiert worden sein. Ferner kann zumindest ein Primärobjekt und zumindest ein Sekundärobjekt in den Trainingsvektoren abgebildet sein. Es ist möglich, dass die Trainingsvektoren ein Mengenverhältnis von Primärobjekten und Sekundärobjekten umfassen, und das Mengenverhältnis mittels eines Referenzmodells bestimmt wurde, indem das Referenzmodell iterativ basierend auf verschiedenen Mengen von Primärobjekten und Sekundärobjekten trainiert wurde, so dass eine Konvergenz einer Evaluationsmetrik basierend auf dem Referenzmodell ermittelt wurde und sich nach der Konvergenz das Mengenverhältnis von Primärobjekten und Sekundärobjekten einstellte. Das Verfahren kann in einem weiteren Schritt ein Erkennen des Primärobjekts umfassen, indem ein Vektor der Feldumgebung erfasst wird und das Primärobjekt mittels des trainierten Objektdetektionsmodells im erfassten Vektor detektiert wird.

Eine Feldumgebung bzw. ein Feld kann einen begrenzten natürlichen oder landwirtschaftlichen Raum umfassen, in dem Pflanzen angebaut, bearbeitet und geerntet werden. Eine Feldumgebung kann eine von der landwirtschaftlichen Arbeitsmaschine zu bearbeitende Fläche aufweisen. Eine Feldumgebung kann natürliche, infrastrukturelle oder künstliche Elemente wie Flüsse, Bäume, Zäune, Straßen, Bewässerungssysteme und/oder andere Bauwerke umfassen. Eine Feldumgebung oder ein Feld kann als ein technisches System angesehen werden und der Vektor der Feldumgebung kann Informationen über den internen Zustand des Felds darstellen.

Das Primärobjekt kann sich auf ein Objekt beziehen, das sich in der Feldumgebung befindet oder temporär aufhält. Beispielsweise kann es sich beim Primärobjekt um ein Tier, einen Menschen, ein Fahrzeug oder ein anderes relevantes Objekt handeln. Das Primärobjekt kann dabei einer Klasse zugeordnet werden. Das Primärobjekt kann ein Hindernis für die landwirtschaftliche Arbeitsmaschine darstellen. Entsprechendes gilt für das Sekundärobjekt, d.h. das Sekundärobjekt kann sich auf ein weiteres Objekt beziehen, das sich in der Feldumgebung befindet. Das Sekundärobjekt kann einer weiteren (zweiten) Klasse zugeordnet werden.

Die Trainingsvektoren können eine Sammlung von Daten, insbesondere Vektordaten, zum Trainieren eines Objektdetektionsmodells umfassen. Die Trainingsvektoren können Eingabedaten und die zugehörigen (richtigen) Ausgaben umfassen. Während des Trainings bzw. Trainingsprozesses kann das Objektdetektionsmodell lernen, Muster und Zusammenhänge in den Daten zu erkennen, um präzise Vorhersagen oder Klassifikationen für neue, unbekannte Daten treffen zu können. Gut ausgewählte und repräsentative Trainingsvektoren (d.h. ein Trainingsdatensatz) können entscheidend für die Leistungsfähigkeit und Genauigkeit des Objektdetektionsmodells sein. Trainingsvektoren können Primärobjekte, Sekundärobjekte und möglicherweise Objekte aus weiteren Klassen umfassen.

Das Objektdetektionsmodell kann zur Objektklassifizierung ausgelegt sein und Objekte in Vektoren detektieren und/oder in vordefinierte Klassen (bspw. Klasse "Tier", "Mensch", "Fahrzeug", usw.) einordnen. Das Objektdetektionsmodell kann Algorithmen, wie bspw. Convolutional Neural Networks (CNNs), verwenden, um aus Vektoren relevante Merkmale zu extrahieren und diese zu analysieren. Das trainierte Objektdetektionsmodell kann mithilfe von Trainingsvektoren optimiert worden sein, um Eingabedaten, d.h. bspw. in einer Feldumgebung erfasste Vektoren, in vordefinierte Kategorien oder Klassen einzuordnen. Durch den Trainingsprozess hat das Objektdetektionsmodell möglicherweise gelernt, Muster und Merkmale in den Trainingsvektoren bzw. Daten zu erkennen und zu interpretieren, sodass es beispielsweise neue, unbekannte Objekte, die in den Trainingsvektoren dargestellt sind, mit hoher Genauigkeit klassifizieren kann. Das Objektdetektionsmodell kann die Fähigkeit aufweisen, einen Objektdetektionswert zu generieren. Der Objektdetektionswert kann eine Wahrscheinlichkeit widerspiegeln, die angibt, inwieweit das erkannte Objekt der definierten Klasse angehört. Sobald der Objektdetektionswert einen festgelegten Schwellwert überschreitet, kann das System mit Sicherheit bestätigen, dass das Objekt zur jeweiligen Klasse gehört.

Das Bereitstellen eines trainierten Objektdetektionsmodells kann sich auf den Prozess beziehen, das trainierte Objektdetektionsmodell in einer Feldumgebung bzw. während eines Ernteprozesses verfügbar zu machen, damit es beispielsweise auf neue Daten angewendet werden kann. Das Bereitstellen umfasst typischerweise die Integration des Modells in eine Anwendung oder einem System (bspw. eine landwirtschaftliche Arbeitsmaschine), das Benutzern den Zugriff auf seine Vorhersagefähigkeiten ermöglicht. Typischerweise wird das Objektdetektionsmodell automatisiert geladen bzw. bereitgestellt. Es ist ferner möglich, dass ein Benutzer mithilfe des bereitgestellten, trainierten Objektdetektionsmodells die Klasse eines Objekts durch manuelle Eingabe bestimmt. Beispielsweise lädt der Benutzer einen Vektor als Eingabedaten in das Objektdetektionsmodell, das dann die passende Klasse ermittelt.

Das Mengenverhältnis von Primärobjekten zu Sekundärobjekten kann das proportionale Verhältnis zwischen den zwei Gruppen von Objekten innerhalb eines Datensatzes, d.h. der Trainingsvektoren, beschreiben. Das Mengenverhältnis kann sich auf die Anzahl der Objekte beziehen, d.h. es kann angeben, wie viele Primärobjekte im Vergleich zu Sekundärobjekten vorhanden sind. Zum Beispiel kann ein Mengenverhältnis von 3:1 bedeuten, dass es drei Primärobjekte für jedes Sekundärobjekt gibt. Das Mengenverhältnis kann auch relativ zur Gesamtobjektmenge angegeben werden, d.h. das Mengenverhältnis kann beispielsweise angeben, dass 25 % der Gesamtobjekte Primärobjekte sind.

Das Referenzmodell kann ein Modell sein, das zur Bestimmung des Mengenverhältnisses herangezogen wird. Es kann dem gleichen Modelltyp wie das Objektdetektionsmodell oder einem anderen Modelltyp angehören. Das Referenzmodell kann als Grundlage dienen, um festzustellen, wie viele Objekte jeder Klasse in einem Datensatz, beispielsweise den Trainingsvektoren, enthalten sind oder sein müssen. Das Referenzmodell kann dabei helfen, die Balance und Verteilung der Daten zu analysieren.

Die Evaluationsmetrik kann ein Maßstab sein (d.h. eine quantifizierbare Einheit), der verwendet wird, um die Leistung eines Modells (bspw. eines Referenzmodells oder eines Objektdetektionsmodells zu beurteilen. Iterativ kann bedeuten, einen Prozess durch wiederholte Zyklen oder Schritte zu durchlaufen, bei denen Ergebnisse aus vorherigen Zyklen zur Verfeinerung und Verbesserung des Prozesses genutzt werden. Bei jedem Iterationsschritt kann ein anderes Mengenverhältnis bzw. andere Menge von Primärobjekten und Sekundärobjekten genutzt werden, um das Referenzmodell oder Objektdetektionsmodell zu trainieren. Mit Menge von Primärobjekten bzw. Sekundärobjekten kann dabei die Anzahl der Primärobjekte bzw. Sekundärobjekte gemeint sein. Ferner kann bei jedem Iterationsschritt die Evaluationsmetrik bestimmt werden. Mit jedem Iterationsschritt kann sich die Evaluationsmetrik einem stabilen Wert annähern.

Konvergenz kann bedeuten, dass mittels Iterationen mit verschiedenen Mengenverhältnissen ein Punkt erreicht wird, an dem die Evaluationsmetrik stabil wird und sich nicht mehr signifikant verändert.

Das Erfassen eines Vektors der Feldumgebung kann bedeuten, räumliche Datenpunkte der Umgebung zu erfassen, in der sich das Primärobjekt befindet, das analysiert oder identifiziert werden soll. Mit dem trainierten Objektdetektionsmodell kann dieses Primärobjekt im Vektor erkannt werden. Die Erkennung des Primärobjekts kann zur Sicherheit, Effizienz und Effektivität der eingesetzten landwirtschaftlichen Maschinen und Verfahren beitragen.

Mit anderen Worten kann das Verfahren vorsehen, ein Modell mit einem Trainingsdatensatz bzw. Trainingsvektoren zu entwickeln, wobei die Trainingsvektoren ein ausgewogenes (Mengen-)Verhältnis von Primär- und Sekundärobjekten umfasst. Um das ausgewogene (Mengen-)Verhältnis dieser Objekttypen zu bestimmen, kann beispielsweise das Referenzmodell verwendet werden, das iterativ mit verschiedenen Objektmengen trainiert wird, bis eine bestimmte Evaluationsmetrik konvergiert. Vorteilhafterweise kann somit sichergestellt werden, dass die Leistung des Referenzmodells bzw. Objektdetektionsmodells maximiert wird. Darüber hinaus lässt sich die optimale bzw. minimale Anzahl an Objekte (d.h. Primär- und Sekundärobjekte) ermitteln, die erforderlich ist, um eine maximale Leistung gemäß der Evaluationsmetrik sicherzustellen.

Vorteilhafterweise kann die landwirtschaftliche Arbeitsmaschine mittels der Erkennung von Primärobjekten, wie beispielsweise Pflanzen, Unkraut oder Hindernissen, effizienter und sicherer arbeiten. Dies kann zu einer Optimierung des Ernteprozesses führen, da Arbeitsmaschinen in der Lage sind, zielgerichtet und automatisch auf verschiedene Situationen im Feld zu reagieren. Ein weiterer Vorteil besteht in der Reduzierung des Bedarfs an manueller Überwachung und Steuerung, was nicht nur den Arbeitsaufwand verringern, sondern auch das Risiko menschlicher Fehler minimieren kann.

Vorteilhafterweise wird somit ein Verfahren für die Landwirtschaft bereitgestellt, das es ermöglicht Objekte in einer Feldumgebung effizient zu erkennen. Dabei kann berücksichtigt werden, dass der Trainingsprozess des Objektdetektionsmodells für manche Objekte (bspw. ein Primärobjekt) eine größere Menge von Bilddaten benötigt als für andere Objekte. Dies könnte darauf zurückzuführen sein, dass manche Objekte aufgrund Ihrer Struktur oder Form leichter zu erlernen sind als andere. Beispielsweise kann mittels des Mengenverhältnisses bestimmt werden, dass die Menge an Primärobjektdaten für das Primärobjekt "Mensch" größer ist als die Menge an Sekundärobjektdaten für das Sekundärobjekt "Fahrzeug".

In einem weiteren Aspekt kann das Verfahren ein Einstellen einer landwirtschaftlichen Arbeitsmaschine, die sich in der Feldumgebung befindet, basierend auf dem erkannten Primärobjekt umfassen.

Die landwirtschaftliche Arbeitsmaschine kann speziell für die Ernte von Nutzpflanzen vorgesehen sein. Bei der landwirtschaftlichen Arbeitsmaschine kann es sich beispielsweise um einen Feldhäcksler, Mähdrescher oder Traktor handeln. Die landwirtschaftliche Arbeitsmaschine kann selbstfahrend und/oder autonom ausgeprägt sein. Das Einstellen der landwirtschaftlichen Arbeitsmaschine kann sich auf den Prozess der Anpassung und Konfiguration der landwirtschaftlichen Arbeitsmaschine beziehen, um Konflikte, die das Primärobjekt hervorführen könnte, zu vermeiden. Das Einstellen kann beispielsweise ein Lenken oder ein Anhalten der landwirtschaftlichen Arbeitsmaschine umfassen. Auf Basis eines erkannten Primärobjekts kann eine automatische Anpassung der Lenkung erfolgen, um sicherzustellen, dass keine Kollisionen mit dem Primärobjekt auftreten. Ferner ist es auch möglich, dass das Einstellen der Arbeitsmaschine eine manuelle Anpassung durch einen Bediener der landwirtschaftlichen Arbeitsmaschine umfasst. Ferner kann das Einstellen umfassen: Eine Justierung von mechanischen Komponenten, eine Kalibrierung elektronischer Systeme sowie eine Anpassung von Parametern wie Geschwindigkeit, Druck und Tiefe, abhängig von Bodenbeschaffenheit, Pflanzenart und Umweltbedingungen.

In einem weiteren Aspekt kann zumindest ein Primärobjekt und zumindest ein Sekundärobjekt in einem der Trainingsvektoren abgebildet sein.

Ein Vorteil, wenn in einem Vektor sowohl das Primärobjekt als auch das Sekundärobjekt abgebildet sind, liegt beispielsweise in einer verbesserten Kontextualisierung und einer Fähigkeit des Modells, Beziehungen zwischen den Objekten zu lernen. Durch eine gleichzeitige Darstellung beider Objekttypen kann das Modell möglicherweise lernen, wie diese Objekte miteinander interagieren und in welchem Kontext sie auftreten. Diese Interaktionen können entscheidend für die korrekte Detektion und Klassifizierung der Objekte sein.

In einem weiteren Aspekt können Trainingsvektoren Punktewolken umfassen, die aus dreidimensionalen Messungen der Feldumgebung abgeleitet sind, und wobei eine Anzahl von Punkten der Punktewolke zusammengefasst dem Primärobjekt zuordbar sind.

Eine Punktwolke ist üblicherweise eine Sammlung von Punkten im dreidimensionalen Raum, die typischerweise durch ihre Koordinaten definiert sind. Jeder Punkt in einer Punktwolke kann eine bestimmte Messung oder Position darstellen und kann Informationen über die Geometrie, Struktur und/oder Dichte eines Objekts oder einer Umgebung enthalten.

Die Punktwolke kann eine detailliertere Analyse der räumlichen Eigenschaften und der Geometrie sowohl der Primärobjekte als auch der Sekundärobjekte ermöglichen. Um die Anzahl an Punkten, die einem Primärobjekt in einem (Trainings-)Vektor zugeordnet werden, zu bestimmen, kann beispielsweise eine Klassifikations-, Segmentierungs- oder Näherungs-Methode eingesetzt werden. Bei diesen Verfahren lassen sich die Punkte, die zum Primärobjekt gehören, typischerweise präzise identifizieren und zählen. Zur Umsetzung dieser Methodik können typischerweise verschiedene Ansätze zum Einsatz kommen, darunter Schwellenwertverfahren, Kantenerkennung oder moderne Techniken wie Deep-Learning-gestützte Bildsegmentierung, die es ermöglichen, die Grenzen des Objekts mit hoher Genauigkeit zu erfassen.

In einem weiteren Aspekt können die Trainingsvektoren mittels eines Umfeldsensors ausgewählt aus der Gruppe bestehend aus Lidar, Radar oder einer Kombination hiervon erfasst worden sein.

Lidar kann eine hochpräzise Erfassung von Punktewolken bzw. 3D-Daten ermöglichen, indem sie die Zeit messen, die Lichtpulse benötigen, um zu Objekten und zurück zu gelangen, was die Qualität der Trainingsvektoren erhöhen kann. Darüber hinaus kann die Kombination von Lidar und Radar für eine umfassendere Datenerfassung sorgen, da Radar auch bei schlechten Sichtverhältnissen wie Nebel oder Regen effektiv arbeiten könnte, was die Robustheit der Datensammlung möglicherweise steigert. Diese Sensoren sind beispielsweise in der Lage, komplexe und dynamische Umgebungen detailliert zu erfassen, was für Anwendungen in der autonomen Fahrzeugtechnik von entscheidender Bedeutung ist. Die Echtzeitdatenerfassung kann es ermöglichen, Algorithmen schnell an sich ändernde Umgebungsbedingungen anzupassen, während die multisensorielle Fusion die Stärken der einzelnen Technologien kombiniert und so die Objekterkennung und -klassifizierung verbessern könnte.

In einem weiteren Aspekt kann das Verfahren ein Auswählen eines aus mehreren trainierten Objektdetektionsmodellen basierend auf einer oder mehreren Bedingungen umfassen. Die Bedingungen können dabei die Landschaft, die Wetterbedingungen, die Art der eingesetzten landwirtschaftlichen Arbeitsmaschine, die Art der eingesetzten Arbeitsaggregate, die Lichtbedingungen (beispielsweise Tag oder Nacht) und/oder den Ernteprozess umfassen. Dabei kann das ausgewählte Objektdetektionsmodell an die spezifischen Bedingungen der Feldumgebung angepasst sein, um die Effizienz und Genauigkeit der Detektion des Primärobjekts zu maximieren, indem ein optimales Modell für die jeweilige Bedingungen identifiziert und verwendet wird.

Indem es die spezifischen Bedingungen wie Landschaft, Wetter, Art der eingesetzten Maschinen und Lichtverhältnisse berücksichtigt, kann es eine maßgeschneiderte Anpassung der Technologie an die jeweilige Umgebung ermöglichen. Dies kann beispielsweise zu einer signifikanten Steigerung der Effizienz und Genauigkeit bei der Detektion von Primärobjekten führen, da das System in der Lage ist, das optimal passende Modell auszuwählen. Dadurch können möglicherweise Fehlerquellen minimiert und die Ernteprozesse optimiert werden, was letztlich zu einer höheren Produktivität und einer besseren Ressourcennutzung führen kann. Zudem fördert diese dynamische Anpassungsfähigkeit möglicherweise die Flexibilität der landwirtschaftlichen Betriebe, die sich schnell wechselnden Umweltbedingungen anpassen müssen.

In einem weiteren Aspekt kann das Verfahren ein Zuordnen von Trainingsgewichten zu den Trainingsvektoren umfassen. Dabei kann ein erstes Trainingsgewicht dem Primärobjekt und ein zweites Trainingsgewicht dem Sekundärobjekt zugewiesen sein. Ferner kann das erste Trainingsgewicht so konfiguriert sein, dass es eine höhere Gewichtung beim Trainieren des Objektdetektionsmodells aufweist als das zweite Trainingsgewicht, um eine höhere Präzision bei der Detektion des Primärobjekts zu gewährleisten. Dies kann insbesondere in Situationen durchgeführt werden, in denen das Primärobjekt von Sekundärobjekten umgeben ist, wodurch die Robustheit des trainierten Objektdetektionsmodells hinsichtlich des Detektierens von Primärobjekten in der Feldumgebung verbessert wird.

Durch die gezielte Gewichtung des Primärobjekts mit einem höheren Trainingsgewicht kann möglicherweise sichergestellt werden, dass das (Objektdetektions-)Modell bei der Detektion dieser Objekte eine verbesserte Genauigkeit erzielt, selbst wenn sie von Sekundärobjekten umgeben sind. Diese Differenzierung ermöglicht es dem Modell beispielsweise, relevante Merkmale des Primärobjekts besser zu erlernen und zu erkennen, wodurch Fehlalarme reduziert und die Zuverlässigkeit der Erkennung erhöht werden könnten. In Situationen, in denen verschiedene Objekte eng beieinander liegen, kann dies die Robustheit des gesamten Systems möglicherweise verbessern. Ferner kann dies zu einer effizienteren Nutzung von Ressourcen und einer höheren Erntequalität führen.

In einem weiteren Aspekt können nach der Konvergenz die Evaluationsmetrik und eine klassenspezifische Evaluationsmetrik für das Primärobjekt in einem Wertebereich liegen. Des Weiteren ist es möglich, dass nach der Konvergenz die Evaluationsmetrik und eine klassenspezifische Evaluationsmetrik für das Sekundärobjekt in einem Wertebereich liegen. Möglicherweise kann nach der Konvergenz eine klassenspezifische Evaluationsmetrik für das Primärobjekt und eine klassenspezifische Evaluationsmetrik für das Sekundärobjekt in einem Wertebereich liegen.

Bei der Evaluationsmetrik kann es sich um eine gesamtheitliche Evaluationsmetrik handeln, wobei die (gesamtheitliche) Evaluationsmetrik die gesamtheitliche Leistung eines Modells beurteilt. Die klassenspezifische Evaluationsmetrik kann ein Maßstab für die Leistung eines Modells bezüglich einer Klasse sein (beispielsweise für die Klasse des Primärobjekts). Beispielsweise kann die klassenspezifische Evaluationsmetrik die Leistung des Modells bezüglich des Primärobjekts sein. Die klassenspezifische Evaluationsmetrik ist typischerweise die gleiche Metrik wie die (gesamtheitliche) Evaluationsmetrik. Die (gesamtheitliche) Evaluationsmetrik kann mittels der klassenspezifischen Evaluationsmetriken gebildet werden. Beispielsweise kann der Mittelwert einer Vielzahl von klassenspezifischen Evaluationsmetriken gebildet werden, um die (gesamtheitliche) Evaluationsmetrik zu bilden.

Wenn die (gesamtheitliche) Evaluationsmetrik und die klassenspezifische Evaluationsmetrik in einem Wertebereich liegen, kann dies beispielsweise bedeuten, dass beide Metriken Werte annehmen, die innerhalb desselben festgelegten Bereichs von Ergebnissen oder Zahlen liegen. Der Wertebereich kann möglicherweise angeben, welche Werte die Metriken maximal und minimal erreichen können.

In einem weiteren Aspekt kann eine Relation zwischen einer klassenspezifischen Evaluationsmetrik für das Primärobjekt und einer klassenspezifischen Evaluationsmetrik für das Sekundärobjekt bestimmt worden sein.

Die Relation kann sich auf das Verhältnis zwischen den Evaluationsmetriken für das Primärobjekt und das Sekundärobjekt beziehen. Diese Betrachtungsweise kann es ermöglichen, eine zusätzliche Bedingung im Trainingsprozess festzulegen, was die Feinabstimmung und Optimierung des Modells weiter fördern kann.

In einem weiteren Aspekt kann die Evaluationsmetrik eine Sensitivität, Präzision, Genauigkeit oder einen F1 Score umfassen.

Sensitivität, auch als Empfindlichkeit oder Recall bekannt, kann die Fähigkeit des Modells angeben, tatsächlich positive Fälle korrekt zu identifizieren. Präzision kann möglicherweise angeben, wie viele der als positiv klassifizierten Fälle tatsächlich positiv sind. Präzision kann entscheidend sein, um Fehlalarme zu minimieren. Genauigkeit kann einen allgemeinen Überblick darüber geben, wie viele der gesamten Vorhersagen korrekt sind.

Der F1-Score, als harmonisches Mittel von Präzision und Sensitivität, kann die Gesamtleistung beurteilen.

Ein weiterer Aspekt bezieht sich auf ein computer-implementiertes Verfahren zum Erstellen von Trainingsvektoren. Das Verfahren kann ein Bereitstellen eines Referenzmodells umfassen. Ferner kann das Verfahren ein Trainieren des Referenzmodell iterativ basierend auf verschiedenen Mengen von Primärobjekten und Sekundärobjekten umfassen. Das Referenzmodell kann iterativ basierend auf verschiedenen Mengen von Primärobjekten und Sekundärobjekten trainiert werden, so dass eine Konvergenz einer Evaluationsmetrik basierend auf dem Referenzmodell ermittelt wurde und sich nach der Konvergenz ein Mengenverhältnis von Primärobjekten und Sekundärobjekten einstellte. Das Verfahren kann ferner ein Erstellen von Trainingsvektoren basierend auf dem Mengenverhältnis umfassen.

Zu den verschiedenen Referenzmodellen, die für die Objekterkennung eingesetzt werden können, gehören beispielsweise Convolutional Neural Networks (CNNs), Regionbased Convolutional Neural Networks (R-CNN), Fast R-CNN, Faster R-CNN, You Only Look Once (YOLO) und Single Shot MultiBox Detector (SSD). Für das Trainieren können beispielsweise überwachte, unüberwachte, halbüberwachte, bestärkende, transferbasierte, online- und batchbasierte Trainingsmethoden eingesetzt werden.

Ein weiterer Aspekt bezieht sich auf ein computer-implementiertes Verfahren zum Trainieren eines Objektdetektionsmodells. Das Verfahren kann ein Bereitstellen eines Objektdetektionsmodells umfassen. Ferner kann das Verfahren ein Trainieren des Objektdetektionsmodells basierend auf Trainingsvektoren umfassen. Dabei können die Trainingsvektoren nach einem der vorhergehenden Aspekte erstellt worden sein.

Trainingsvektoren bzw. Vektoren können mit Labels versehen sein. Mittels Trainings des Modells auf die Trainingsvektoren kann es lernen, spezifische Merkmale zu erkennen und mit den richtigen Labels zu verknüpfen. Nach erfolgreicher Validierung seiner Genauigkeit kann das Modell neue, unbekannte Vektoren analysieren und zuverlässig klassifizieren.

Ein weiterer Aspekt bezieht sich auf ein Computersystem zum Bereitstellen eines trainierten Objektdetektionsmodells. Das Computersystem kann Mittel zum Senden des trainierten Objektdetektionsmodells an eine landwirtschaftliche Arbeitsmaschine umfassen. Dabei kann das Objektdetektionsmodell nach einem der vorhergehenden Aspekte trainiert worden sein.

Das Computersystem kann beispielsweise als Server oder in der Cloud betrieben werden. Dabei kann das Computersystem mit der landwirtschaftlichen Arbeitsmaschine Daten austauschen. Das Computersystem kann beispielsweise Sensordaten, Maschinendaten oder Modelldaten verarbeiten, speichern und analysieren. Das Computersystem kann Mittel zum Trainieren des Objektdetektionsmodells bereitstellen. Beispielsweise kann das Computersystem Rechenressourcen, spezialisierte Software und Algorithmen umfassen, um große Datenmengen effizient zu verarbeiten und das Modell zu optimieren.

Ein weiterer Aspekt bezieht sich auf ein System zur Datenverarbeitung für eine landwirtschaftliche Arbeitsmaschine, umfassend einen Prozessor, der so angepasst und/oder konfiguriert ist, dass er das Verfahren nach einem der vorhergehenden Aspekte ausführt.

Dieses System kann ein trainiertes Objektdetektionsmodell, das mit einem Mengenverhältnis von Primärobjekten und Sekundärobjekten trainiert wurde, bereitstellen, empfangen und/oder nutzen. Das trainierte Objektdetektionsmodell kann in gespeicherter Form auf dem System vorliegen. Dies kann bedeuten, dass das Objektdetektionsmodell nach dem Training so aufbereitet wurde, dass es direkt auf dem Prozessor einsatzbereit ist. Durch die Speicherung des Modells auf dem System kann die landwirtschaftliche Arbeitsmaschine effizient und in Echtzeit auf das Modell zugreifen, um Objekte in der Feldumgebung zu analysieren und das Primärobjekt zu identifizieren. Diese lokale Speicherung ermöglicht beispielsweise eine schnelle Verarbeitung und reduziert die Abhängigkeit von externen Datenquellen oder einer kontinuierlichen Internetverbindung, was besonders in abgelegenen landwirtschaftlichen Gebieten von Vorteil sein kann.

Ein weiterer Aspekt bezieht sich auf eine landwirtschaftliche Arbeitsmaschine mit einem System zur Datenverarbeitung nach einem der vorhergehenden Aspekte.

Die landwirtschaftliche Arbeitsmaschine kann mit einem Sensorsystem ausgestattet sein, das für die Erfassung von Vektoren, umfassend Informationen über die Feldumgebung, eingerichtet ist. Die erfassten Vektoren können von dem System zur Datenverarbeitung verwendet werden (bzw. diesem zur Verfügung gestellt werden). Sensorsystem und System zur Datenverarbeitung können in Verbindung stehen und Daten austauschen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Für den Fachmann ist ersichtlich, dass die vorgestellten Verfahren in Form von Anweisungen in Software oder auf einem Computerprogrammprodukt implementiert oder gespeichert sein können. Dabei können gespeicherte Anweisungen ermöglichen, die Schritte nach dem Verfahren auszuführen, wenn eine entsprechende datenverarbeitende Maschine durch die Software gesteuert oder geregelt wird. Ausführungsformen beziehen sich daher auch auf ein Speichermedium mit darauf gespeicherter Software, die ausgebildet ist, um die vorgestellten Verfahren durchzuführen, wenn die Software auf einer datenverarbeitenden Einrichtung ausgeführt wird. Alle Aspekte des Verfahrens bzw. Verfahrensschritte können möglicherweise automatisiert ablaufen.

Weitere Vorteile und Merkmale ergeben sich aus den folgenden Ausführungsformen, die sich zum Teil auf die Figuren beziehen. Die Figuren zeigen die Ausführungsformen nicht immer maßstabsgetreu. Die Abmessungen der verschiedenen Merkmale können insbesondere zur Klarheit der Beschreibung entsprechend vergrößert oder verkleinert sein. Hierzu sind die Figuren zumindest teilweise schematisiert.

Es zeigt:
- Fig. 1: schematische Darstellung eines computer-implementierten Verfahren zum Erkennen eines Primärobjekts in einer Feldumgebung gemäß einer Ausführungsform;
- Fig. 2: eine schematische Darstellung einer landwirtschaftlichen Arbeitsmaschine mit einem System zur Datenverarbeitung gemäß einer Ausführungsform;
- Fig. 3: eine schematische Darstellung eines Vektors der Feldumgebung gemäß einer Ausführungsform;
- Fig. 4: Darstellung von Ergebnissen eines Iterationsverfahrens gemäß einer Ausführungsform; und
- Fig. 5: schematische Darstellung eines computer-implementierten Verfahren zum Trainieren des Objektdetektionsmodells gemäß einer Ausführungsform.

In der folgenden Beschreibung wird auf die beigefügten Figuren verwiesen, die Teil der Offenbarung sind und bestimmte Aspekte und Ausführungsformen veranschaulichen, unter denen die vorliegende Offenbarung verstanden werden kann. Gleiche Bezugszeichen beziehen sich auf gleiche oder zumindest funktionell oder strukturell ähnliche Merkmale.

Im Allgemeinen gilt eine Offenbarung eines beschriebenen Verfahrens auch für eine entsprechende Vorrichtung zur Durchführung des Verfahrens oder ein entsprechendes System, das ein oder mehrere Vorrichtungen umfasst, und umgekehrt. Wird beispielsweise ein bestimmter Verfahrensschritt beschrieben, so kann eine entsprechende Vorrichtung ein Merkmal zur Durchführung des beschriebenen Verfahrensschrittes enthalten, auch wenn dieses Merkmal in der Abbildung nicht ausdrücklich beschrieben oder dargestellt ist. Wird dagegen beispielsweise ein bestimmtes Gerät auf der Grundlage von Funktionseinheiten beschrieben, kann ein entsprechendes Verfahren einen oder mehrere Schritte zur Durchführung der beschriebenen Funktionalität enthalten, auch wenn diese Schritte in den Abbildungen nicht explizit beschrieben oder dargestellt sind. Ähnlicherweise kann ein System entsprechende Vorrichtungsmerkmal oder Merkmale zur Durchführung eines bestimmten Verfahrensschritts umfassen. Die Merkmale der verschiedenen oben oder unten beschriebenen beispielhaften Aspekte und Ausführungsformen können kombiniert werden, sofern nicht ausdrücklich etwas anderes angegeben ist.

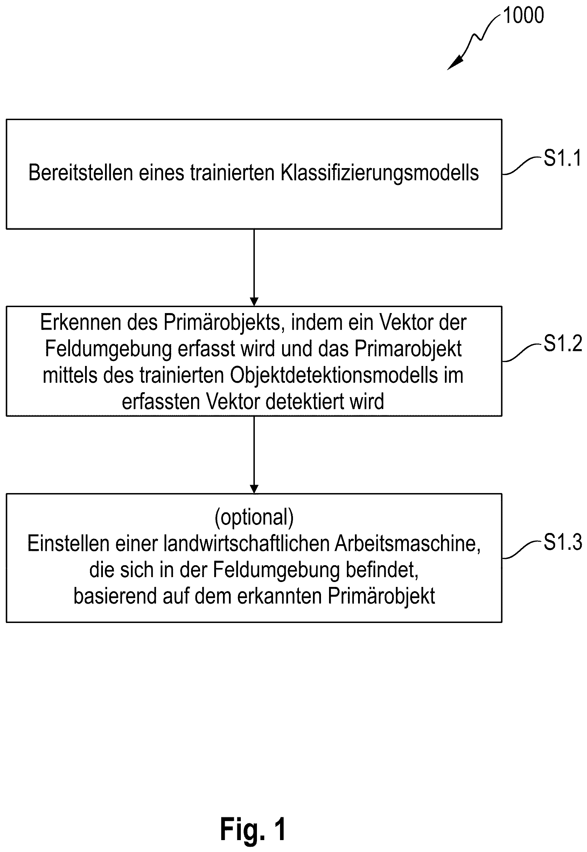

Fig. 1 zeigt eine schematische Darstellung eines computer-implementierten Verfahren 1000 zum Erkennen eines Primärobjekts in einer Feldumgebung gemäß einer Ausführungsform.

Das Verfahren 1000 umfasst in einem ersten Schritt S1.1 ein Bereitstellen eines trainierten Objektdetektionsmodells. Dabei kann das Objektdetektionsmodell basierend auf Trainingsvektoren, umfassend ein Mengenverhältnis von Primärobjekten und Sekundärobjekten, trainiert worden sein. Ferner kann beispielsweise zumindest ein Primärobjekt und zumindest ein Sekundärobjekt in den Trainingsvektoren abgebildet sein. Ferner kann das Mengenverhältnis mittels eines Referenzmodells bestimmt worden sein, indem das Referenzmodell iterativ basierend auf verschiedenen Mengen von Primärobjekten und Sekundärobjekten trainiert wurde, so dass eine Konvergenz einer Evaluationsmetrik basierend auf dem Referenzmodell ermittelt wurde und sich nach der Konvergenz das Mengenverhältnis von Primärobjekten und Sekundärobjekten einstellte. Ein Vektor ist üblicherweise eine strukturierte Datenstruktur, die räumliche Informationen über die Position und Ausdehnung eines Objekts, insbesondere eines Primärobjekts, in der Feldumgebung und/oder strukturelle Informationen wie Dichte und Materialeigenschaften umfasst.

In einem weiteren Schritt S1.2 umfasst das Verfahren 1000 ein Erkennen des Primärobjekts, indem ein Vektor der Feldumgebung erfasst wird und das Primärobjekt mittels des trainierten Objektdetektionsmodells im erfassten Vektor detektiert wird. Mittels des Objektdetektionsmodells ist es demnach möglich, zu erkennen, welches Objekt, beispielsweise ein Mensch, ein Tier oder ein Baum, im erfassten Vektor dargestellt bzw. abgebildet wird.

In einem weiteren optionalen Schritt S1.3 umfasst das Verfahren 1000 ein Einstellen einer landwirtschaftlichen Arbeitsmaschine, die sich in der Feldumgebung befindet, basierend auf dem erkannten Primärobjekt.

Vorteilhafterweise kann mittels dieses Verfahrens sichergestellt werden, dass die Leistung des Referenzmodells bzw. Objektdetektionsmodells maximiert wird. Darüber hinaus lässt sich die optimale bzw. minimale Anzahl an Objekten (d.h. Primär- und Sekundärobjekten) ermitteln, die erforderlich ist, um eine maximale Leistung gemäß der Evaluationsmetrik sicherzustellen.

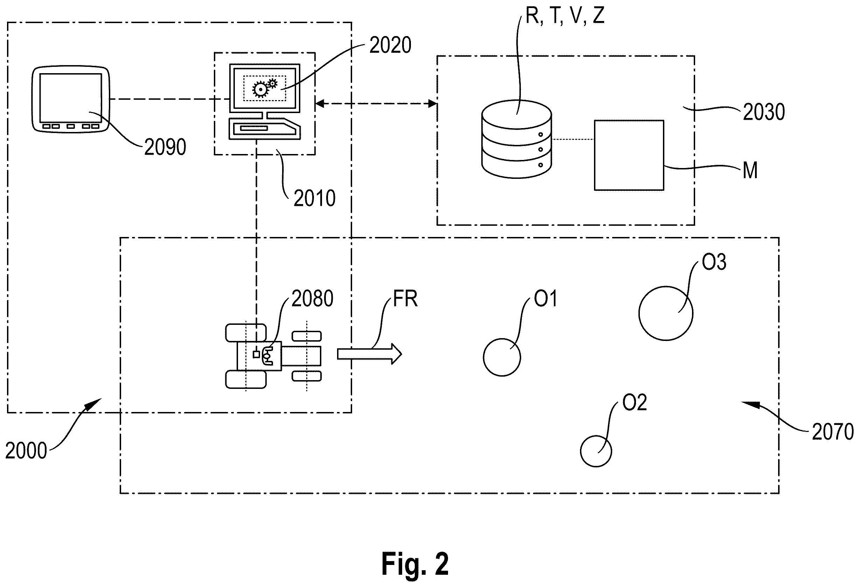

Fig. 2 zeigt eine schematische Darstellung einer landwirtschaftlichen Arbeitsmaschine 2000 mit einem System 2010 zur Datenverarbeitung gemäß einer Ausführungsform.

Die landwirtschaftliche Arbeitsmaschine 2000 befindet sich in einer Feldumgebung 2070, wobei es sich bei der Feldumgebung 2070 in diesem Beispiel um eine begrenzte natürliche, landwirtschaftliche Fläche handelt, auf der Pflanzen angebaut, bearbeitet und geerntet werden. Die landwirtschaftliche Arbeitsmaschine 2000 bearbeitet diese Fläche, indem sie sich in die Fahrtrichtung FR bewegt und beispielsweise Erntegut erntet. In der Feldumgebung 2070 befindet sich ein Primärobjekt O1, ein Sekundärobjekt O2 und ein weiteres Objekt O3. Diese Objekte O1, O2, O3 können Hindernisse für die landwirtschaftlichen Arbeitsmaschine 2000 darstellen. Ferner können die Objekte O1, O2, O3 auch Ziele (bspw. im Sinne von Nutzpflanzen die geerntet werden sollen) sein

Das System 2010 zur Datenverarbeitung der landwirtschaftlichen Arbeitsmaschine 2000 umfasst beispielsweise einen Prozessor 2020, der so angepasst und/oder konfiguriert ist, dass er das Verfahren 1000 gemäß der in Fig. 1 dargestellten Ausführungsform ausführt.

Ferner kann ein Computersystem 2030 zum Bereitstellen eines trainierten Objektdetektionsmodells M vorgesehen sein. Das Computersystem 2030 umfasst beispielsweise Mittel zum Senden des Objektdetektionsmodells M an die landwirtschaftliche Arbeitsmaschine 2000. Entsprechend kann das Objektdetektionsmodell M von dem System 2010 zur Datenverarbeitung empfangen und gespeichert werden. Das Objektdetektionsmodell M kann für die Objekterkennung offline auf der landwirtschaftlichen Arbeitsmaschine 2000 verwendet werden. Das Referenzmodell R, Trainingsvektoren T, das Mengenverhältnis V und ein erfasste Vektor Z können in einer Datenbank des Computersystems 2030 gespeichert sein.

Die landwirtschaftliche Arbeitsmaschine 2000 kann mit einem Sensorsystem 2080 ausgestattet sein, das für die Erfassung von Vektoren Z der Feldumgebung 2070 eingerichtet ist. Das Sensorsystem 2080 kann einen Umfeldsensor umfassen, wobei der Umfeldsensor ausgewählt aus der Gruppe bestehend aus Lidar, Radar oder einer Kombination wurde. Lidar kann eine hochpräzise Erfassung von Punktewolken bzw. 3D-Daten ermöglichen, die anschließend in einem Vektor Z gespeichert werden kann. Die Lidar Erfassung kann erfolgen, indem die Zeit gemessen wird, die Lichtpulse benötigen, um vom Sensorsystem 2080 zu Objekten und zurück zu gelangen. Die erfassten Vektoren Z können von dem System 2010 zur Datenverarbeitung verwendet werden (bzw. diesem zur Verfügung gestellt werden). Das Sensorsystem 2080 und System 2010 zur Datenverarbeitung können in Verbindung stehen und Daten austauschen.

Mittels des Systems 2010 zur Datenverarbeitung kann das Primärobjekt O1 in der Feldumgebung 2070 erkannt werden, indem ein Vektor Z der Feldumgebung 2070 erfasst wird und das Primärobjekt O1 mittels des trainierten Objektdetektionsmodells M im erfassten Vektor Z detektiert wird. Das System 2010 zur Datenverarbeitung kann ferner veranlassen oder kann derart konfiguriert sein, die landwirtschaftliche Arbeitsmaschine 2000 basierend auf dem erkannten Primärobjekt O1 einzustellen. Das Einstellen der landwirtschaftlichen Arbeitsmaschine 2000 bezieht sich vorliegend auf den Prozess der Anpassung und Konfiguration der landwirtschaftlichen Arbeitsmaschine 2000, um Konflikte, die die Objekte O1, O2, O3 hervorführen könnten (d.h. beispielsweise eine Kollision), zu vermeiden. Das Einstellen der landwirtschaftlichen Arbeitsmaschine 2000 kann auch ein gezieltes Ansteuern der Objekte O1, O2, O3 umfassen. Das Einstellen kann beispielsweise ein Lenken oder ein Stoppen der landwirtschaftlichen Arbeitsmaschine 2000 umfassen. Auf Basis eines erkannten Primärobjekts O1 kann eine automatische Anpassung der Lenkung erfolgen, um sicherzustellen, dass die landwirtschaftliche Arbeitsmaschine 2000 exakt einen Pfad verfolgt und keine Kollisionen mit dem Primärobjekt O1 auftreten.

Entsprechendes gilt auch für die Erkennung von Sekundärobjekten. Die landwirtschaftliche Arbeitsmaschine 2000 kann ferner eine Ausgabeeinrichtung 2090 aufweisen, um beispielsweise den Vektor Z und/oder erkannte Objekte einem Bediener anzugeben. Somit ist es möglich, dass die landwirtschaftliche Arbeitsmaschine 2000 manuell durch einen Bediener angepasst wird, sobald ein erkanntes Objekt, beispielsweise in Kombination mit dem Vektor Z, auf der Ausgabeeinrichtung 2090 gezeigt wird. Aus Gründen der besseren Darstellung ist es ferner möglich, dass der Vektor Z auf der Ausgabeeinrichtung 2090 mit einem Bild, das von einem Kamerasystem erfasst wird, überlagert wird. Es ist somit möglich, dass die 3D Informationen des Vektors Z mit den 2D Informationen eines Bildes kombiniert werden. Vorteilhafterweise kann die landwirtschaftliche Arbeitsmaschine 2000 mittels der Erkennung von Primärobjekten O1 oder Sekundärobjekten O2 effizienter und sicherer arbeiten.

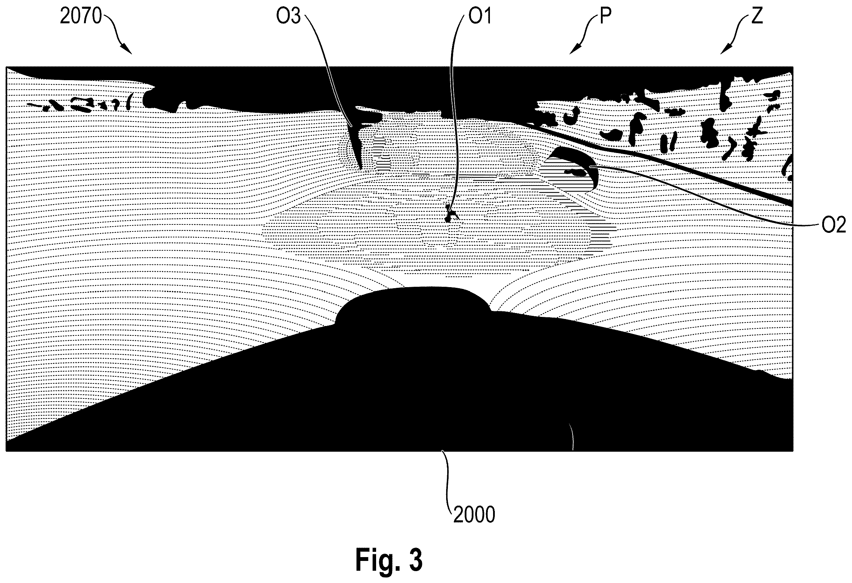

Fig. 3 zeigt eine schematische Darstellung eines Vektors Z der Feldumgebung 2070 gemäß einer Ausführungsform. Der Vektor Z wurde mit dem Umfeldsensor, der in diesem Fall ein Lidar Sensor ist, des Sensorsystems 2080 der landwirtschaftlichen Arbeitsmaschine 2000 erfasst. Der Vektor Z wurde aus Sicht der landwirtschaftlichen Arbeitsmaschine 2000 in Richtung der Fahrtrichtung FR erfasst.

Der Vektor Z umfasst eine Punktewolke P, die hier beispielhaft eine Sammlung von Punkten im dreidimensionalen Raum darstellt. Die Punkte sind typischerweise durch ihre Koordinaten (x, y, z) definiert. Jeder Punkt in einer Punktwolke P kann eine bestimmte Messung oder Position darstellen und kann Informationen über die Geometrie, Struktur und/oder Dichte eines Objekts oder einer Umgebung enthalten. Dabei wurden hier beispielsweise mittels des Umfeldsensors verschiedene Punkte in der Feldumgebung 2070 erfasst, indem die Zeit gemessen wurde, die Lichtpulse benötigen, um ausgehend vom Umfeldsensor zu Punkten und zurück zum Umfeldsensor zu gelangen.

Der Vektor Z umfasst bestimmte Punkte, die Objekten zugeordnet werden können. Dabei kann das erfindungsgemäße computer-implementierte Verfahren 1000 zum Einsatz kommen, indem das Primärobjekt O1 (hier beispielsweise ein Mensch) mittels des trainierten Objektdetektionsmodells M im erfassten Vektor Z detektiert wird. Ferner können auch das Sekundärobjekt O2 und/oder ein weiteres Objekt O3 mittels des trainierten Objektdetektionsmodells M detektiert werden.

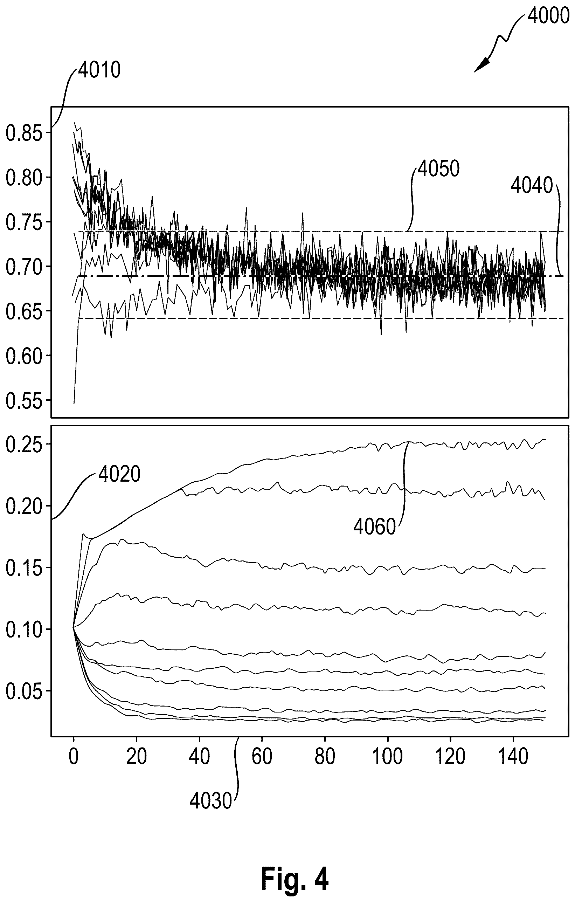

Fig. 4 zeigt eine Darstellung von Ergebnissen 4000 eines Iterationsverfahrens gemäß einer Ausführungsform. Die Ergebnisse umfassen klassenspezifische Genauigkeiten 4010 und klassenspezifische Mengenverhältnisse 4020 für verschiedene Iterationsschritte 4030. Im Vorfeld wurden zehn Klassen festgelegt und die Objekte in allen Trainingsvektoren T jeweils einer Klasse zugeordnet. In einem Vektor sind beispielsweise zwei Objekte, ein Hund und ein Mensch, abgebildet. Im nächsten Schritt wurde das Referenzmodell R iterativ basierend auf verschiedenen Mengen von Trainingsvektoren T und Objekten trainiert.

Fig. 4 zeigt das Verhalten über mehrere Iterationsschritte 4030 des Iterationsverfahrens (abgebildet auf der x-Achse). In der oberen Abbildung wird der Verlauf der klassenspezifischen Genauigkeit für jede der zehn Klassen dargestellt. Die Evaluationsmetrik E ist in diesem Fall die Genauigkeit des Referenzmodells R. Die klassenspezifische Genauigkeit 4010 ist in diesem Ausführungsbeispiel ein Maßstab für die Leistung des Referenzmodells R bezüglich einer Klasse (beispielsweise Klasse für das Primärobjekt und eine Klasse für das Sekundärobjekt). Nach mehreren Iterationsschritten erreichen die klassenspezifischen Genauigkeiten für jede Klasse ihre Konvergenz, d.h. die klassenspezifischen Genauigkeiten nähern sich einem Konvergenzwert 4040. Somit liegen die klassenspezifischen Genauigkeiten (bzw. Evaluationsmetriken 4010) nach der Konvergenz in einem Wertebereich 4050 (bspw. eine klassenspezifische Genauigkeit bzw. Evaluationsmetrik 4010 für das Primärobjekt O1 und eine klassenspezifische Genauigkeit bzw. Evaluationsmetrik 4010 für das Sekundärobjekt O2). Dabei kann der Konvergenzwert 4040 den Mittelwert dieses Wertebereichs 4050 bilden.

In der unteren Abbildung der Fig. 4 wird der Verlauf des klassenspezifischen Mengenverhältnisses für jede der zehn Klassen veranschaulicht. Nach mehreren Iterationsschritten nähern sich die Mengenverhältnisse V der einzelnen Klassen einem stabilen bzw. konstanten Wert an. Beispielsweise erreicht das Verhältnis der Klasse mit dem höchsten Anteil (zum Beispiel "Hund") nach der Konvergenz den Wert 0,25. Dies bedeutet, dass 25 % aller Objekte der Trainingsvektoren dieser Klasse (d.h. "Hund") zugeordnet sind. Entsprechend ergeben sich andere klassenspezifische Mengenverhältnisse für die weiteren Klassen.

Die Ergebnisse zeigen, dass das Objektdetektionsmodell bei bestimmten Objekten, wie etwa Hunden, auf erhebliche Herausforderungen stoßen könnte. Diese Objekte scheinen weniger charakteristische Merkmale aufzuweisen oder variieren möglicherweise stärker in ihrer Darstellung, was die Erkennung erschwert. Somit kann es auch sein, dass es für das Objektdetektionsmodell M schwierig ist, solche Objekte präzise zu klassifizieren.

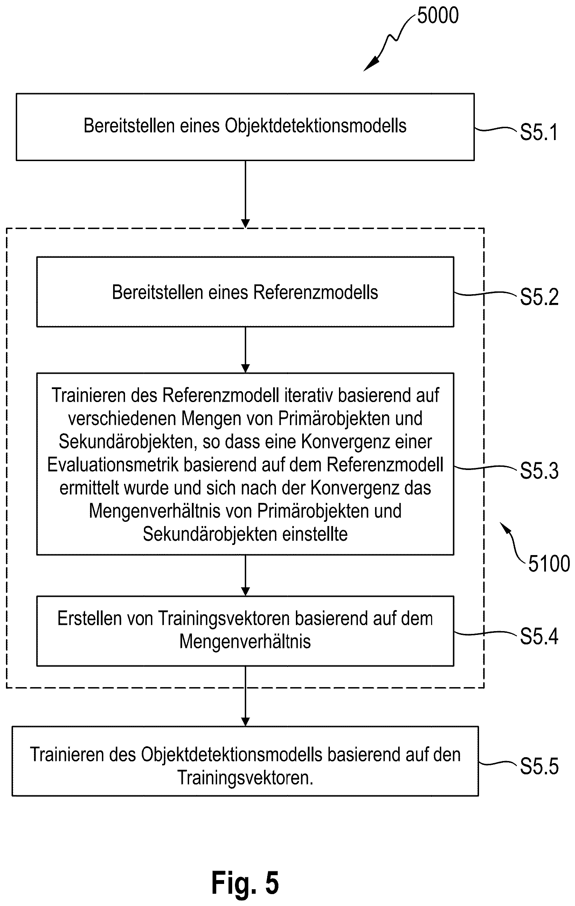

Fig. 5 zeigt eine schematische Darstellung eines computer-implementierten Verfahren 5000 zum Trainieren des Objektdetektionsmodells M gemäß einer Ausführungsform.

Das Verfahren 5000 umfasst in einem ersten Schritt S5.1 Bereitstellen eines Objektdetektionsmodells M. Das Objektdetektionsmodell M liegt beispielsweise auf dem System 2010 zur Datenverarbeitung der landwirtschaftlichen Arbeitsmaschine 2000 in gespeicherter Form vor. Ferner ist das Objektdetektionsmodell M zur Objektklassifizierung eingerichtet und kann Vektordaten bzw. einzelne Vektoren in vordefinierte Klassen (bspw. Klasse "Tier", "Mensch", usw.) einordnen.

Zum Erstellen der Trainingsvektoren T kann ein computer-implementiertes Verfahren 5100 zum Einsatz kommen. Dabei wird in einem Schritt S5.2 ein Referenzmodells R bereitgestellt. Das Referenzmodell R ist dabei als ein Modell zu verstehen, das zur Bestimmung des Mengenverhältnisses V herangezogen wird. Es kann dem gleichen Modelltyp wie das Objektdetektionsmodell M oder einem anderen Modelltyp angehören.

Ein weiterer Schritt S5.3 sieht vor, dass Referenzmodell R iterativ basierend auf verschiedenen Mengen von Primärobjekten O1 und Sekundärobjekten O2 trainiert wird, so dass eine Konvergenz einer Evaluationsmetrik E basierend auf dem Referenzmodell R ermittelt wurde und sich nach der Konvergenz das Mengenverhältnis V von Primärobjekten O1 und Sekundärobjekten O2 einstellte.

In einem weiteren Schritt S5.4 werden Trainingsvektoren T basierend auf dem Mengenverhältnis V erstellt. Das Mengenverhältnis V von Primärobjekten O1 zu Sekundärobjekten O2 beschreibt das proportionale Verhältnis zwischen den zwei Gruppen von Objekten O1, O2 innerhalb der Trainingsvektoren T. Das Mengenverhältnis V gibt vorliegend beispielsweise an, wie viele Primärobjekte O1 im Vergleich zu Sekundärobjekten O2 in den Trainingsvektoren dargestellt sind, zum Beispiel 3:1, was bedeutet, dass es drei Primärobjekte O1 für jedes Sekundärobjekt O2 gibt. Es kann ferner die absolute Anzahl an Vektoren bestimmt werden, die die Trainingsvektoren umfassen sollten.

In einem weiteren Schritt S5.5 umfasst das Verfahren 5000 ein Trainieren des Objektdetektionsmodells M basierend auf den Trainingsvektoren T. Während des Trainings bzw. Trainingsprozesses lernt das Objektdetektionsmodell M, Muster und Zusammenhänge in den Trainingsdaten T zu erkennen, um präzise Vorhersagen oder Klassifikationen für neue, unbekannte Bilddaten treffen zu können.

Vorteilhafterweise ermöglicht das Verfahren, die Gesamtanzahl der Vektoren der Trainingsvektoren T mittels Mengenverhältnisses V flexibel einzustellen. Beispielsweise kann eine Gesamtzahl von 2000 Vektoren verwendet werden, wobei das Mengenverhältnis V die Anzahl der klassenspezifischen Vektoren bestimmt. Ferner kann die Gesamtanzahl auf 20000 Vektoren erhöht werden, um die Genauigkeit signifikant zu steigern. Dabei kann das Mengenverhältnis V gleichbleiben. Ein Vorteil des beschriebenen Verfahrens ist die Möglichkeit, das Modell zunächst mit einer kleinen Datenmenge zu testen, bevor es auf eine größere Datenbasis hochskaliert wird. Diese Vorgehensweise ermöglicht es Entwicklern, beispielsweise schnell erste Ergebnisse zu erzielen und grundlegende Hypothesen zu überprüfen, ohne aufwendig große Datensätze verwenden zu müssen. Durch das Testen mit einer reduzierten Anzahl von Trainingsvektoren T können potenzielle Probleme im Modell frühzeitig identifiziert und behoben werden, was den Entwicklungsprozess effizienter gestaltet. Ist das Modell mit der kleineren Datenmenge erfolgreich, kann die Gesamtanzahl der Vektoren schrittweise erhöht werden, um die Genauigkeit und Leistung zu verbessern.

### Bezugszeichenliste

- M, M1, M2, ..., Mn: Objektdetektionsmodell
- R: Referenzmodell
- T: Trainingsvektoren
- V: Mengenverhältnis
- E: Evaluationsmetrik
- P: Punktewolke
- O1: Primärobjekt
- O2: Sekundärobjekt
- O3: weiteres Objekt
- 1000: Verfahren zum Erkennen eines Primärobjekts
- S1.1-S1.3: Verfahrensschritte
- 2000: Landwirtschaftliche Arbeitsmaschine
- 2010: System zur Datenverarbeitung
- 2020: Prozessor
- 2030: Computersystem
- 2070: Feldumgebung
- 2080: Sensorsystem
- 2090: Ausgabeeinrichtung
- 4000: Ergebnisse
- 4010: klassenspezifische Evaluationsmetrik
- 4020: klassenspezifische Mengenverhältnisse
- 4030: Iterationsschritte
- 4040: Konvergenzwert
- 4050: Wertebereich
- 4060: Verlauf
- 5000: Verfahren zum Trainieren eines Objektdetektionsmodells
- 5100: Verfahren zum Erstellen von Trainingsvektoren
- S5.1-S5.6: Verfahrensschritte

## Patentansprüche

1. Computer-implementiertes Verfahren (1000) zum Erkennen eines Primärobjekts (O1) in einer Feldumgebung (2070),
das Verfahren (1000) umfassend:
Bereitstellen eines trainierten Objektdetektionsmodells (M), wobei das Objektdetektionsmodell (M) basierend auf Trainingsvektoren (T) trainiert wurde, wobei zumindest ein Primärobjekt (O1) und zumindest ein Sekundärobjekt (O2) in den Trainingsvektoren (T) abgebildet ist, wobei die Trainingsvektoren (T) ein Mengenverhältnis (V) von Primärobjekten (O1) und Sekundärobjekten (O2) umfassen, und wobei das Mengenverhältnis (V) mittels eines Referenzmodells (R) bestimmt wurde, indem das Referenzmodell (R) iterativ basierend auf verschiedenen Mengen von Primärobjekten (O1) und Sekundärobjekten (O2) trainiert wurde, so dass eine Konvergenz einer Evaluationsmetrik (E) basierend auf dem Referenzmodell (R) ermittelt wurde und sich nach der Konvergenz das Mengenverhältnis (V) von Primärobjekten (O1) und Sekundärobjekten (O2) einstellte; und
Erkennen des Primärobjekts (O1), indem ein Vektor (Z) der Feldumgebung (2070) erfasst wird und das Primärobjekt (O1) mittels des trainierten Objektdetektionsmodells (M) im erfassten Vektor (Z) detektiert wird.

2. Verfahren (1000) nach Anspruch 1,
umfassend:
Einstellen einer landwirtschaftlichen Arbeitsmaschine (2000), die sich in der Feldumgebung (2070) befindet, basierend auf dem erkannten Primärobjekt (O1).

3. Verfahren (1000) nach Anspruch 1 oder 2, wobei zumindest ein Primärobjekt (O1) und zumindest ein Sekundärobjekt (O2) in einem der Trainingsvektoren (T) abgebildet ist.

4. Verfahren (1000) nach einem der vorhergehenden Ansprüche, wobei die Trainingsvektoren (T) Punktewolken (P) umfassen, die aus dreidimensionalen (3D) Messungen der Feldumgebung (2070) abgeleitet sind, und wobei eine Anzahl von Punkten der Punktewolke (P) zusammengefasst dem Primärobjekt (O1) zuordbar sind.

5. Verfahren (1000) nach einem der vorhergehenden Ansprüche, wobei die Trainingsvektoren (T) mittels eines Umfeldsensors ausgewählt aus der Gruppe bestehend aus Lidar, Radar oder einer Kombination hiervon erfasst worden sein.

6. Verfahren (1000) nach einem der vorherigen Ansprüche, wobei das Verfahren (1000) ferner umfasst:
Auswählen eines aus mehreren trainierten Objektdetektionsmodellen (M1, M2, ..., Mn) basierend auf einer oder mehreren Bedingungen, die die Landschaft, die Wetterbedingungen, die Art der eingesetzten landwirtschaftlichen Arbeitsmaschine, die Art der eingesetzten Arbeitsaggregate, die Lichtbedingungen (beispielsweise Tag oder Nacht) und/oder den Ernteprozess umfassen, wobei das ausgewählte Objektdetektionsmodell (M1, M2, ..., Mn) an die spezifischen Bedingungen der Feldumgebung (2070) angepasst ist, um die Effizienz und Genauigkeit der Detektion des Primärobjekts (O1) zu maximieren, indem ein optimales Modell für die jeweilige Bedingungen identifiziert und verwendet wird.

7. Verfahren (1000) nach einem der vorhergehenden Ansprüche, wobei das Verfahren (1000) ferner umfasst:
Zuordnen von Trainingsgewichten (W1, W2) zu den Trainingsvektoren (T), wobei ein erstes Trainingsgewicht (W1) dem Primärobjekt (O1) und ein zweites Trainingsgewicht (W2) dem Sekundärobjekt (O2) zugewiesen ist, wobei das erste Trainingsgewicht (W1) so konfiguriert ist, dass es eine höhere Gewichtung beim Trainieren des Objektdetektionsmodells (M) aufweist als das zweite Trainingsgewicht (W2), um eine höhere Präzision bei der Detektion des Primärobjekts (O1) zu gewährleisten, insbesondere in Situationen, in denen das Primärobjekt (O1) von Sekundärobjekten (O2) umgeben ist, wodurch die Robustheit des trainierten Objektdetektionsmodells (M) hinsichtlich des Detektierens von Primärobjekten (O1) in der Feldumgebung (2070) verbessert wird.

8. Verfahren (1000) nach einem der vorherigen Ansprüche,
wobei nach der Konvergenz die Evaluationsmetrik (E) und eine klassenspezifische Evaluationsmetrik (4010) für das Primärobjekt (O1) in einem Wertebereich liegen, und/oder
wobei nach der Konvergenz die Evaluationsmetrik (E) und eine klassenspezifische Evaluationsmetrik (4010) für das Sekundärobjekt (O2) in einem Wertebereich liegen, und/oder
wobei nach der Konvergenz eine klassenspezifische Evaluationsmetrik (4010) für das Primärobjekt und eine klassenspezifische Evaluationsmetrik (4010) für das Sekundärobjekt (O2) in einem Wertebereich liegen.

9. Verfahren (1000) nach einem der vorherigen Ansprüche,
eine Relation zwischen einer klassenspezifischen Evaluationsmetrik (4010) für das Primärobjekt (O1) und einer klassenspezifischen Evaluationsmetrik (4010) für das Sekundärobjekt (O2) bestimmt wurde.

10. Verfahren (1000) nach einem der vorherigen Ansprüche,
wobei die Evaluationsmetrik (E) eine Sensitivität, Präzision, Genauigkeit oder einen F1 Score umfasst.

11. Computer-implementiertes Verfahren (5100) zum Erstellen von Trainingsvektoren (T), umfassend:
Bereitstellen eines Referenzmodells (R);
Trainieren des Referenzmodell (R) iterativ basierend auf verschiedenen Mengen von Primärobjekten (O1) und Sekundärobjekten (O2), so dass eine Konvergenz einer Evaluationsmetrik (E) basierend auf dem Referenzmodell (R) ermittelt wurde und sich nach der Konvergenz das Mengenverhältnis (V) von Primärobjekten (O1) und Sekundärobjekten (O2) einstellte; und
Erstellen von Trainingsvektoren (T) basierend auf dem Mengenverhältnis (V).

12. Computer-implementiertes Verfahren (5000) zum Trainieren eines Objektdetektionsmodells (M), umfassend:
Bereitstellen des Objektdetektionsmodells (M);
Trainieren des Objektdetektionsmodells (M) basierend auf Trainingsvektoren (T), wobei die Trainingsvektoren (T) mittels des Verfahrens (5100) nach Anspruch 11 erstellt wurde.

13. Computersystem (2030) zum Bereitstellen eines trainierten Objektdetektionsmodells (M), umfassend Mittel zum Senden des trainierten Objektdetektionsmodells (M) an eine landwirtschaftliche Arbeitsmaschine (2000), wobei das Objektdetektionsmodell (M) mittels des Verfahrens (5000) nach Anspruch 12 trainiert wurde.

14. System (2010) zur Datenverarbeitung für eine landwirtschaftliche Arbeitsmaschine (2000), umfassend einen Prozessor (2020), der so angepasst und/oder konfiguriert ist, dass er das Verfahren nach einem der vorherigen Ansprüche ausführt.

15. Landwirtschaftliche Arbeitsmaschine (2000) mit einem System (2010) zur Datenverarbeitung nach Anspruch 14.
